# EUROPEAN PATENT SPECIFICATION

(11) **EP 3 882 870 B1**
(45) Date of publication and mention of the grant of the patent: **19.07.2023**
(21) Application number: 19883783.3
(22) Date of filing: 24.10.2019
(51) Int. Cl.: G06T 19/00, G01C 21/36, A63F 13/537, A63F 13/216

(54) **METHOD AND DEVICE FOR IMAGE DISPLAY, STORAGE MEDIUM AND ELECTRONIC DEVICE**
VERFAHREN UND VORRICHTUNG ZUR BILDANZEIGE, SPEICHERMEDIUM UND ELEKTRONISCHE VORRICHTUNG
PROCÉDÉ ET DISPOSITIF D'AFFICHAGE D'IMAGE, SUPPORT DE STOCKAGE ET DISPOSITIF ÉLECTRONIQUE

(30) Priority: 12.11.2018 CN 201811340566
(43) Date of publication of application: 22.09.2021
(73) Proprietor: Tencent Technology (Shenzhen) Company Limited, Shenzhen, Guangdong, 518057 (CN)
(72) Inventor: SHAO, Yuewei, Shenzhen, Guangdong 518057 (CN)
(74) Representative: Gunzelmann, Rainer
(86) International application number: PCT/CN2019/112901
(87) International publication number: WO 2020/098465

(56) References cited:
- EP-A1- 1 746 391
- EP-A2- 1 024 467
- CN-A- 104 075 719
- CN-A- 105 008 861
- CN-A- 109 685 909
- US-A1- 2015 354 979
- US-A1- 2017 294 047

## Description

### RELATED APPLICATION

This application claims priority to Chinese Patent Application No. 201811340566.3, entitled "METHOD AND APPARATUS FOR IMAGE DISPLAY, STORAGE MEDIUM, AND ELECTRONIC DEVICE", filed with the China National Intellectual Property Agency on November 12, 2018.

### FIELD OF THE TECHNOLOGY

The present disclosure relates to the field of image processing, and in particular, to a method and a computer program a storage medium, and an electronic device.

### BACKGROUND OF THE APPLICATION

In an application of a location-based service, a corresponding virtual object may be displayed in a map scene based on a current location of a user, improving immersion experience of the user. Patent document with publication No. US 2015/354979 A1 discloses lowering a towering map object in a navigation map, based on a distance between such object and a view point. Patent document with publication No. US 2017/294047 A1 discloses reducing a height or a length of a vertically-long object according to a distance of such object to a virtual camera. In these documents, only the distance of an object is considered when adjusting a displayed shape thereof.

### SUMMARY

A method and an apparatus for image display, a storage medium, and an electronic device are provided according to embodiments of the present disclosure, in order to address at least a technical problem that a displayed building may obstruct a field of view of a viewer in conventional technology. The invention is defined by the appended claims.

### BRIEF DESCRIPTION OF THE DRAWINGS

The drawings illustrated herein provide further understanding of the present disclosure, and form a part of the present disclosure. Exemplary embodiments of the present disclosure and description thereof are intended for explaining the present disclosure, and do not constitute any inappropriate limitation to the present disclosure. The drawings are as follows.
Figure 1 is a schematic diagram of network architecture according to an embodiment of the present disclosure;
Figure 2 is a flowchart of a method for image display according to an embodiment of the present disclosure;
Figure 3 is a schematic diagram of a map scene according to an embodiment of the present disclosure;
Figure 4 is a schematic diagram of another map scene according to an embodiment of the present disclosure;
Figure 5 is a schematic diagram of another map scene according to an embodiment of the present disclosure;
Figure 6 is a schematic diagram of another map scene according to an embodiment of the present disclosure;
Figure 7 is a schematic diagram of another map scene according to an embodiment of the present disclosure;
Figure 8 is a schematic diagram of another map scene according to an embodiment of the present disclosure;
Figure 9 is a schematic diagram of an apparatus for image display according to an embodiment of the present disclosure; and
Figure 10 is a structural block diagram of an electronic device according to an embodiment of the present disclosure.

### DESCRIPTION OF EMBODIMENTS

For those skilled in the art better understanding solutions of the present disclosure, hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Terms such as "first" and "second" in the specification, the claims and the accompanying drawings of the present disclosure are intended to distinguish between similar objects, but do not necessitate a specific sequence or order. It should be understood that the data termed in such a way are interchangeable in proper circumstances, so that embodiments of the present disclosure described herein can be implemented in an order besides the order illustrated or described herein. In addition, the terms "include", "comprise" and any other variants are intended to cover the non-exclusive inclusion. For example, a process, a method, a system, a product, or a device that includes a series of steps or units may not be limited to the steps or units expressly listed, and may include other steps or units not expressly listed or inherent to such process, method, product, or device.

The "Unity game engine" refers to a general-purpose cross-platform game engine, which generally uses the C language for developing game logic.

A "game side" refers to a part of a C language script which is related to game logic based on a game engine such as Unity, and is independent from a system platform.

A "native side" refers to a part of the C language script other than the game side, including java-side logic in Android, an objC code in iOS, a part of a linking library implementing map rendering in embodiments of the present disclosure, or the like.

A "mesh" refers to at least an entity that can be rendered during a rendering operation, including at least data of a set of vertices, where each vertex may include attributes such as a coordinate and a normal vector. The mesh may include index data that indexes the data of vertex.

A "shader" refers to an instruction code applied to a graphics processing unit (GPU) during a rendering operation, and is configured to instruct the GPU to render a mesh and generate a rendering result. For example, the shader instructs the GPU to calculate vertex transformation and calculate illumination.

A "location-based service" (LBS) refers to a value-added service, in which a corresponding service is provided to a user by obtaining a location of the user.

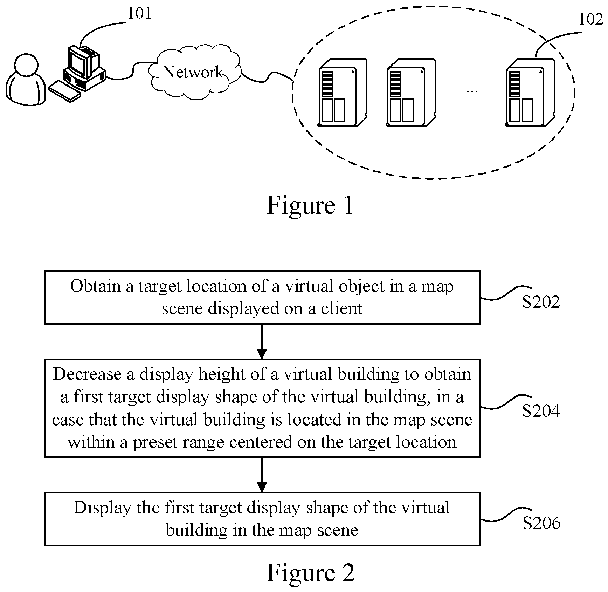

A method for image display is provided according to an aspect of embodiments of the present disclosure. In one embodiment, the method for image display may be applied to a hardware scenario including a terminal 101 and a server 102, as shown in Figure 1. In Figure 1, the terminal 101 is connected to the server 102 via a network, and the server may provide an LBS service for the terminal. The network includes, but is not limited to, a wide area network, a metropolitan area network, or a local area network. The terminal 101 may be a mobile phone, a PC, a notebook or a tablet computer.

In embodiments of the present disclosure, the method for image display may be performed by the terminal 101, or may be performed by a client installed on the terminal 101. Technical solutions of the present disclosure may be applied, but are not limited, to following scenarios.

Technical solutions of the present disclosure may be applied to a social scenario applying augmented reality (AR), virtual reality (VR), or other technologies. The foregoing server is embodied as a social server, and may provide a social service and a social-related service (such as an LBS service) for each terminal on which a social client is installed. In a social application using the AR or the VR, a virtual object corresponding to a user may be rendered in a social scene after the user logs in. A location of the virtual object in a map of the virtual scene may be mapped from that of the user in the real scene. Generally, it is required to render virtual items on the ground in the virtual scene, and such items are much smaller than a building in the virtual scene. Hence, the items are often hidden by the buildings when viewed from a low position, which is undesirable since the items are of great importance in practice. Display of the buildings is retained in technical solutions of the present disclosure, where a building in a certain range around the virtual object is lowered to reveal the important items for the virtual object, and a farther building is normally displayed. Thereby, it is ensured that metropolitan scenery is still visible, while it is convenient for the virtual object to discover important items located around.

Technical solutions of the present disclosure may be applied to a game scenario providing the LBS service, for example, in a multiplayer online battle arena (MOBA) game, a first-person shooter (FPS) game, or a third-person shooter (TPS) game. Similarly, in the LBS game, a character model (such as a virtual object) of a player and a game item are often rendered on a map. Generally, the character model and the game item are much smaller than a building, and hence are often hidden by the virtual buildings when viewed from a low position. Such obstruction is undesirable in a game, because the character model and the game item are often of great importance. Display of the buildings is retained in technical solutions of the present disclosure, where a building in a certain range around a player is lowered to reveal important objects for the player, and a farther building is normally displayed. Thereby, it is ensured that metropolitan scenery is still visible.

An electronic device is mainly taken as a feasible implementation in following embodiments of the present disclosure, to facilitate description of technical solutions.

Hereinafter technical solutions related to the forgoing scenarios are further described in details in conjunction with steps as shown in Figure 2. Figure 2 is a flowchart of a method for image display according to an embodiment of the present disclosure. The method for image display includes steps S202 to S206, as shown in Figure 2.

In step S202, a target location of a virtual object is obtained in a map scene displayed on a client.

In one embodiment, the virtual object is capable to move in the map scene.

The client may be of a social application implemented through AR, VR or other technologies, of a game application providing an LBS service, or the like. Correspondingly, the map scene may be a map of a virtual social scene corresponding to a real scene, a map of a game scene corresponding to a real scene, or the like.

Movement of the virtual object in the map scene may be controlled by a target object (such as a social-app user or a game player) using the client. For example, the virtual object moves under direct manipulation of the target object on the client, or the virtual object moves in accordance with movement of the target object.

In step S204, a display height of a virtual building is decreased to obtain a first target display shape of the virtual building, in a case that the virtual building is located in the map scene within a preset range centered on the target location.

The preset range may refer to a circular area with a preset radius, a square area with a preset side-length, a rectangular area with preset length and width, a rhombus with a fixed side-length, or an area of another shape, which is centered on the target location.

A view of the virtual object may be obstructed in the map scene by the virtual building located in the preset range centered on the target location. In such case, the display height of the virtual building is adjusted in the map scene, such that the view of the virtual object is not obstructed by the virtual building. Hence, important items and objects located within the preset range centered on the target location are more likely to be visible in a field of view of the virtual object.

In step S206, the first target display shape of the virtual building is displayed in the map scene.

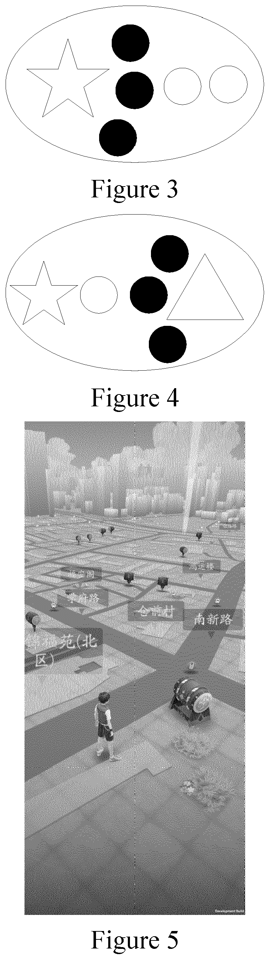

Reference is made to Figure 3. A pentagram represents a character model serving as the virtual object, and black circles and white circles represent objects (such as a virtual building or a virtual item) located within a range of visibility of the virtual object. When a technical solution according to an embodiment of the present disclosure is applied, display heights of the virtual buildings (represented by the black circles) around the character model, as displayed in Figure 3, are decreased. For example, the virtual buildings are displayed in a flat shape. Thereby, neither the virtual object nor the virtual items (represented by the white circles) with a small height, such as a drum, is hidden. Therefore, the field of view of the virtual object can be improved and less obstructed by the virtual building.

Reference is made to Figure 4. A pentagram represents a character model serving as the virtual object, and black circles, white circles, and a triangle represent objects (such as a virtual building or a virtual item) located within a range of visibility of the virtual object. The triangle represents an object with a small height. The white circle represents an object with a small height that does not obstruct the field of view of the virtual object, for example, represents a drum or another virtual item. The black circle represents a virtual building that hides the object represented by the triangle. When a technical solution according to an embodiment of the present disclosure is applied, the display heights of the virtual buildings represented by the black circles may be decreased. For example, the virtual buildings are displayed in a flat shape, so as not to hide the object represented by the triangle. Therefore, the field of view of the virtual object can be improved and less obstructed by the virtual building.

In the above steps, the target location of the virtual object is obtained in the map scene displayed on the client. In a case that the virtual building is located in the map scene within the preset range centered on the target location, the display height of the virtual building is decreased to obtain the first target display shape of the virtual building. The first target display shape of the virtual building is displayed in the map scene. Since the display height of the virtual building is decreased, a field of view for the virtual object can be improved and less obstructed by the virtual building. Addressed is a technical problem that a displayed building may obstruct a field of view of a viewer in conventional technology.

Hereinafter it is taken as an example for detailed illustration that a technical solution of the present disclosure is applied to an LBS game.

In an optional embodiment, a virtual object is configured to represent a target object in a real scene, and the target object may participate in the LBS game by using a mobile terminal. Therefore, the mobile terminal may serve as the target object. Namely, the virtual object is configured to represent the mobile terminal in the real scene, and the target location of the virtual object in the map scene is configured to represent a location of the mobile terminal in the real scene. In other words, the map scene may be obtained by simulating the real scene, and the location in the map scene may be obtained by mapping from the location in the real scene. For example, the map scene may be obtained by scaling a map of the real scene in equal proportion. A virtual building in the map scene is configured to represent a corresponding real building in the real scene.

The virtual object is configured to be capable to move in the map scene. For example, movement of the virtual object in the map scene is configured to follow movement of the mobile terminal in the real scene. Namely, when a player carrying the mobile terminal moves in the real scene, the location of the mobile terminal serves as a location of the player, and the mobile terminal may control movement of the virtual object in the virtual scene by detecting the location of the mobile terminal.

In an optional embodiment, obtaining the target location of the virtual object in the map scene displayed on the client includes a following step. The target location of the virtual object in the map scene may be determined based on the location of the mobile terminal in the real scene. For example, the location of the mobile terminal representing the virtual object in the real scene is obtained, and a location in the map scene displayed on the client, which is mapped from the location of the mobile terminal in the real scene, is determined to be the target location of the virtual object. For example, there is a location A in the real scene and a location *a* in the map scene, and the location *a* simulates the location A. In a case that the location of the mobile terminal in the real scene is A, the location of the virtual object in the map scene may be determined as *a.*

In embodiments of the present disclosure, adjusted is a display shape of a building which hides an object with a smaller height and is located in a preset range around the target location of the virtual object. Thereby, the object with the smaller height can be accurately displayed, and is not hidden in a simulated scene. Addressed is a technical problem that a location of the object with a small height is inaccurately displayed in the map scene in conventional technology. Achieved is a technical effect that display of the location is more accurate.

In an optional embodiment, another object, which is located in the preset range centered on the target location and do not hide the object (or an important object) with the smaller height, may also be adjusted. Such adjustment may be same as an adjustment on the aforementioned virtual building. Namely, in this embodiment, only the virtual building that hides the object with the smaller height may be adjusted, or both the virtual building and another object that does not hide the object with the smaller height may be adjusted. When an identifier of the object with the smaller height is hidden by the virtual building, a height of the virtual building may be decreased, so that the virtual building is displayed with zero height or a small height. The small height may be level with an instep of a character (i.e. the virtual object) as shown in Figure 5, or may be other heights. The virtual building with the small height does not hide the identifier.

A manner of adjusting the virtual building is same as that of adjusting other objects. Hereinafter a manner of adjusting the virtual building is taken as an example for illustration, and other objects may be adjusted in the same manner.

In an optional embodiment, decreasing the display height of the virtual building to obtain the first target display shape of the virtual building includes a following step. A display shape of the virtual building in the map scene is adjusted to a flat shape. That is, the first target display shape is the flat shape in this embodiment.

In the foregoing embodiments, displaying the first target display shape of the virtual building in the map scene includes followings steps. A first animation is played in the map scene, where the first animation is configured to show a gradual decrease of the display height of the virtual building. The first target display shape of the virtual building in the map scene is displayed, after playing the first animation is finished.

In an optional embodiment, the first animation played in the map scene includes multiple frames, and each frame may be determined in a following manner. A central processing unit in a terminal running the client is used to obtain a current height of a vertex of the virtual building in a mesh of the map scene, where the mesh is configured to record spatial location data of the vertex of the virtual building, and the spatial location data includes the current height of the vertex of the virtual building. The current height of the vertex of the virtual building in the spatial location data is adjusted to a target height, to obtain updated spatial location data, where the target height is smaller than the current height. The updated spatial location data of the vertex of the virtual building is transmitted to the graphics processing unit in the terminal, to obtain a rendered image through rendering. The rendered image serves as said frame of the first animation.

The display shape of the virtual building is displayed in the map scene that simulates the real scene. Reference is made to Figure 5. Taller buildings located outside the preset range centered on the target location are displayed in an upper part of Figure 5. Buildings located within the preset range centered on the target location of the virtual object are displayed in other parts, and are shown as flat irregular shapes. A schematic image of an object with a smaller height, such as an item drum, is further displayed.

Data of the mesh is adjusted by the central processing unit. Thereby, the data of the vertex of the virtual building recorded in the mesh is changed, which decreases a height of the building corresponding to the vertex. Each time the data of the mesh is updated, an image frame is rendered and displayed. On a basis of a height of the building in the currently displayed image frame, the data of the mesh is modified again, the graphics processing unit performs rendering, and the height of the building is further decreased. Each image frame serves as a frame of the first animation, and a process of rendering and displaying multiple image frames is a process of playing the first animation.

The mesh records the data of the vertices of multiple objects, and the data of the vertex of one object serves as a group in the mesh. Multiple groups of data may be adjusted, namely, vertices of multiple buildings may be adjusted, when adjusting the data in the mesh. Thereby, heights of the multiple buildings may be changed. For example, the heights of the multiple buildings may be all increased or all decreased. Alternatively, a height a part of the buildings may be increased, while a height of another part may be decreased.

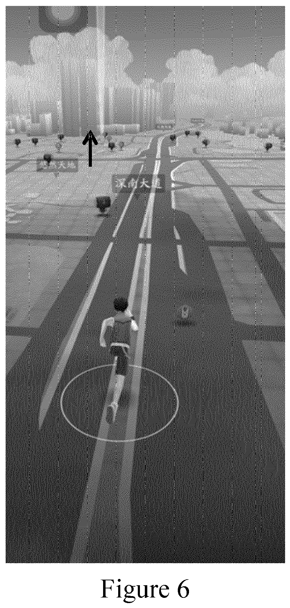

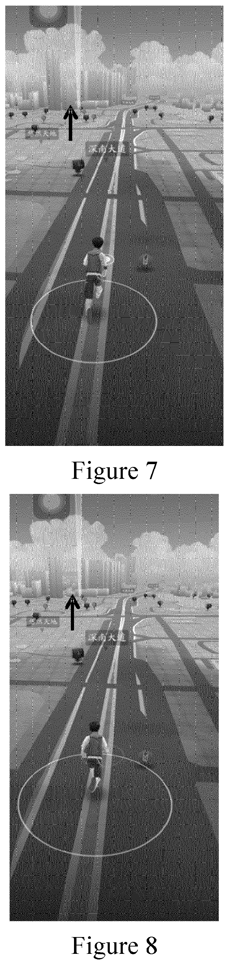

Reference is made to a virtual building indicated by arrows in Figure 6 to Figure 8. Figure 6 shows the virtual building with a normal height, Figure 7 shows the virtual building with a decreased height, and Figure 8 shows the virtual building displayed in a flat state in which an identifier of the building is displayed. A process of displaying Figure 6, Figure 7, and Figure 8 in the above-mentioned sequence is a process of playing the first animation. Herein it is taken as an example that the process of playing the first animation is illustrated based on three image frames. In an actual playing process, more than three image frames may be configured in playing the first animation which shows a gradual decrease of a height of the building.

For example, a distance between the building and a location of the user in the real scene is detected. Play of the animation showing the decrease is started, in a case that the distance between the building and the geographic location of the user is less than or equal to 5000 meters and a previous distance is greater than 5000 meters. After the play of the animation is finished, the building in the simulated scene is displayed in the flat state.

When the building is in the flat state, play of an animation showing an increase in the height (namely, a second animation) is started, in a case that the distance between the virtual building and the target location of the virtual object is greater than 5000 meters and a previous distance is less than or equal to 5000 meters. The flat state of the virtual building is updated to an exterior image of the virtual building. Similarly, such process may be implemented in a following manner.

After the first target display shape of the virtual building in the map scene is displayed, the display height of the virtual building is increased to obtain a second target display shape of the virtual building, in a case that the virtual building is not located in the preset range centered on another target location to which the virtual object moves in the map scene. The second target display shape of the virtual building is displayed in the map scene.

In an optional embodiment, displaying the second target display shape of the virtual building in the map scene includes following steps. A second animation is played in the map scene, where the second animation is configured to show a gradual increase of the display height of the virtual building. The second target display shape of the virtual building in the map scene is displayed after playing the second animation is finished.

Reference is made to a virtual building indicated by arrows in Figure 6 to Figure 8. Figure 6 shows the virtual building with a normal height, Figure 7 shows the virtual building with a decreased height, and Figure 8 shows the virtual building displayed in a flat state in which an identifier of the building is displayed. A process of displaying Figure 8, Figure 7, and Figure 6 in the above-mentioned sequence is a process of playing the second animation. Herein it is taken as an example that the process of playing the second animation is illustrated based on three image frames. In an actual playing process, more than three image frames may be configured in playing the second animation which shows a gradual increase of a height of the building.

For example, a distance between the building and a location of the user in the real scene is detected. Play of the animation showing the increase (namely, the second animation) is started, in a case that the distance between the building and the geographic location of the user is greater than 5000 meters and a previous distance is less than or equal to 5000 meters. After the play of the animation is finished, the building in the flat state is displayed in the simulated scene.

It is noted that the foregoing method embodiments are stated as a series of action combinations for concise descriptions. Those skilled in the art should know that the present disclosure is not limited to a sequence of the described actions, because some steps may be performed in another sequence or simultaneously according to an embodiment of the present disclosure. In addition, those skilled in the art should also know that all embodiments described in this specification are exemplary embodiments, and the related actions and modules may not be necessarily required in the present disclosure.

From the foregoing description, those skilled in the art may clearly appreciate that the method according to the foregoing embodiments may be implemented through software plus a necessary general hardware platform, or through hardware, and the former is preferable in many cases. Based on such understanding, an essence or a part contributing over the conventional technology, of technical solutions in the present disclosure, may be implemented as a software product. The computer software product is stored in a storage medium (such as a ROM/RAM, a magnetic disk, or an optical disc), and includes several instructions for instructing a terminal device (which may be a mobile phone, a computer, a server, a network device, and the like) to perform the method described in embodiments of the present disclosure.

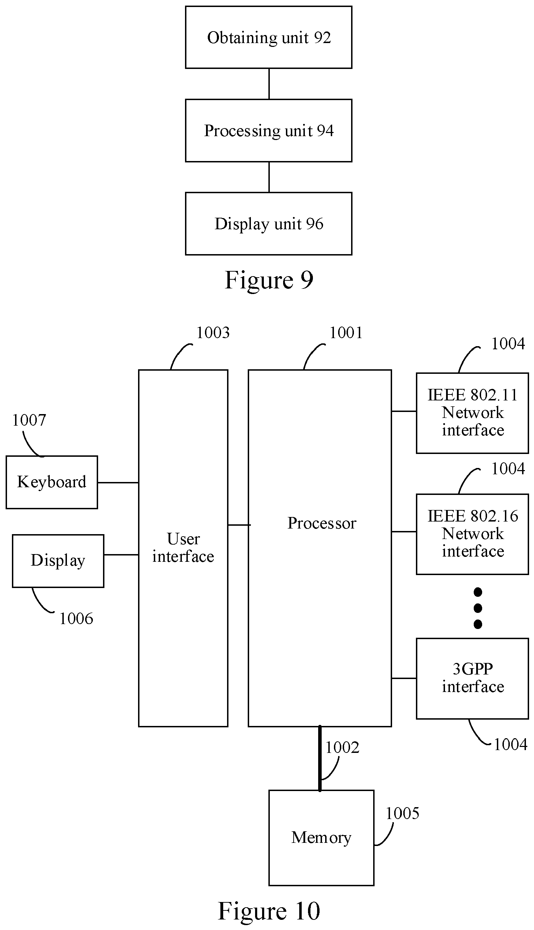

According to another aspect of embodiments of the present disclosure, an apparatus for image display is further provided for implementing the foregoing method for image display. As shown in Figure 9, the apparatus includes an obtaining unit 92, a processing unit 94 and a display unit 96.

The obtaining unit 92 is configured to obtain a target location of a virtual object in a map scene displayed on a client. In an optional embodiment, the virtual object is capable to move in the map scene.

The client may be of a social application implemented through AR, VR or other technologies, of a game application providing an LBS service, or the like. Correspondingly, the map scene may be a map of a virtual social scene corresponding to a real scene, a map of a game scene corresponding to a real scene, or the like.

Movement of the virtual object in the map scene may be controlled by a target object (such as a social application user or a game player) using the client. For example, the virtual object moves under direct manipulation of the target object on the client, or the virtual object moves in accordance with movement of the target object.

The processing unit 94 is configured to decrease a display height of a virtual building to obtain a first target display shape of the virtual building, in a case that the virtual building is located in the map scene within a preset range centered on the target location.

The preset range may refer to a circular area with a preset radius, a square area with a preset side-length, a rectangular area with preset length and width, a rhombus with a fixed side-length, or an area of another shape, which is centered on the target location.

A view of the virtual object may be obstructed in the map scene by the virtual building located in the preset range centered on the target location. In such case, the display height of the virtual building is adjusted in the map scene, such that the view of the virtual object is not obstructed by the virtual building. Hence, objects located within the preset range centered on the target location are more likely to be visible in a field of view of the virtual object.

The display unit 96 is configured to display the first target display shape of the virtual building in the map scene.

With the above modules, the target location of the virtual object is obtained in the map scene displayed on the client. In a case that the virtual building is located in the map scene within the preset range centered on the target location, the display height of the virtual building is decreased to obtain the first target display shape of the virtual building. The first target display shape of the virtual building is displayed in the map scene. Since the display height of the virtual building is decreased, a field of view for the virtual object can be improved and less obstructed by the virtual building. Addressed is a technical problem that a displayed building may obstruct a field of view of a viewer in conventional technology.

In an optional embodiment, when the obtaining unit obtains the target location of the virtual object in the map scene displayed on the client, the virtual object is configured to represent the mobile terminal in the real scene, and the target location of the virtual object in the map scene is configured to represent a location of the mobile terminal in the real scene. The virtual building in the map scene is configured to represent a corresponding real building in the real scene.

In an optional embodiment, the virtual object being configured to be capable to move in the map scene includes that movement of the virtual object in the map scene is configured to follow movement of the mobile terminal in the real scene.

In an optional embodiment, when obtaining the target location of the virtual object in the map scene displayed on the client, the obtaining unit may: obtain the location of the mobile terminal, represented by the virtual object, in the real scene; and determine a location in the map scene displayed on the client, which is mapped from the location of the mobile terminal in the real scene, to be the target location of the virtual object.

In an optional embodiment, the processing unit is further configured to adjust the display shape of the virtual building in the map scene to a flat shape.

In an optional embodiment, the display unit is further configured to: play a first animation in the map scene, where the first animation is configured to show a gradual decrease of the display height of the virtual building; and display the first target display shape of the virtual building in the map scene after playing the first animation is finished.

In an optional embodiment, the processing unit includes an obtaining module, an adjustment module, and a rendering module, for processing each frame in the first animation. The obtaining module is configured to obtain a current height of a vertex of the virtual building in a mesh of the map scene, by using a central processing unit in a terminal running the client. The mesh is configured to record spatial location data of the vertex of the virtual building, and the spatial location data includes the current height of the vertex of the virtual building. The adjustment module is configured to adjust the current height of the vertex of the virtual building in the spatial location data, to obtain updated spatial location data. The target height is smaller than the current height. The rendering module is configured to transmit the updated spatial location data of the vertex of the virtual building to the graphics processing unit in the terminal, to obtain a rendered image through rendering. The rendered image serves as said frame of the first animation.

Data of the mesh is adjusted by the central processing unit. Thereby, the data of the vertex of the virtual building recorded in the mesh is changed, which decreases a height of the building corresponding to the vertex. Each time the data of the mesh is updated, an image frame is rendered and displayed. On a basis of a height of the building in the currently displayed image frame, the data of the mesh is modified again, the graphics processing unit performs rendering, and the height of the building is further decreased. Each image frame serves as a frame of the first animation, and a process of rendering and displaying multiple image frames is a process of playing the first animation.

In an optional embodiment, after displaying the first target display shape of the virtual building in the map scene, the display unit may be further configured to: increase the display height of the virtual building to obtain a second target display shape of the virtual building, in a case that the virtual building is not located in the preset range centered on another target location to which the virtual object moves in the map scene; and display the second target display shape of the virtual building in the map scene.

In an optional embodiment, when increasing the display height of the virtual building, the display unit may play a second animation in the map scene. The second animation is configured to show a gradual increase of the display height of the virtual building. The display unit may display the second target display shape of the virtual building, after playing the second animation is finished.

Reference is made to Figure 6 to Figure 8. Figure 6 shows the virtual building with a normal height, Figure 7 shows the virtual building with a decreased height, and Figure 8 shows the virtual building displayed in a flat state in which an identifier of the building is displayed. A process of displaying Figure 8, Figure 7, and Figure 6 in the above-mentioned sequence is a process of playing the second animation. Herein it is taken as an example that the process of playing the second animation is illustrated based on three image frames. In an actual playing process, more than three image frames may be configured in playing the second animation which shows a gradual increase of a height of the building.

According to another aspect of embodiments of the present disclosure, an electronic device is further provided for implementing the foregoing method for image display. As shown in Figure 10, the electronic device includes a memory and a processor. The memory stores a computer program, and the processor is configured to perform steps in any foregoing method embodiment through the computer program.

Figure 10 is a structural block diagram of an electronic device according to an optional embodiment of the present disclosure. As shown in Figure 10, the electronic device may include one or more (only one is shown) processors 1001, at least one communication bus 1002, a user interface 1003, at least one transmission apparatus 1004, and a memory 1005. The communication bus 1002 is configured to implement connection and communication between other components. The user interface 1003 may include a display 1006 and a keyboard 1007. In an optional embodiment, the transmission apparatus 1004 may include a standard wired or wireless interface.

In an optional embodiment, the electronic device may be located in at least one of multiple network devices in a computer network.

In an optional embodiment, the processor may be configured to perform the following steps through the computer program.

A target location of a virtual object is obtained in a map scene displayed on a client.

A display height of a virtual building is decreased to obtain a first target display shape of the virtual building, in a case that the virtual building is located in the map scene within a preset range centered on the target location.

The first target display shape of the virtual building is displayed in the map scene.

Those skilled in the art may appreciate that the structure as shown in Figure 10 is merely an example. The terminal may be a terminal device such as a smart phone (for example, an Android mobile phone or an iOS mobile phone), a tablet computer, a palmtop computer, a mobile Internet device (MID), or a PAD. A structure of the foregoing electronic devices is not limited by what is shown in Figure 10. For example, the terminal may further include more or fewer components (for example, a network interface and a display apparatus) on a basis of what is shown in Figure 10, or have a configuration different from that shown in Figure 10.

The memory 1005 may be configured to store a software program and a module, for example, a program instruction/module corresponding to the method and the apparatus for reconstructing a motion trajectory in embodiments of the present disclosure. The processor 1001 performs various functional applications and data processing by running the software program and the module stored in the memory 1005, so as to implement the foregoing method for reconstructing the motion trajectory. The memory 1005 may include a high speed random access memory, and may further include a non-volatile memory, for example, one or more magnetic storage apparatuses, a flash memory, or another non-volatile solid-state memory. In some embodiments, the memory 1005 may further include a memory that is remotely configured for the processor 1001, and the remote memory may be connected to a terminal via a network. Examples of the network include, but are not limited to, the Internet, an intranet, a local area network, a mobile communication network, and a combination thereof.

The transmission apparatus 1004 is configured to receive or transmit data via a network, and may be configured to transmit data between the processor and the memory. A specific example of the network may include a wired network or a wireless network. In an embodiment, the transmission apparatus 1004 includes a network interface controller (NIC). The NIC may be connected to another network device and a router via a network cable, so as to communicate with the Internet or the local network. In an embodiment, the transmission apparatus 1004 is a radio frequency (RF) module, which is configured to communicate wirelessly with the Internet.

Specifically, the memory 1005 is configured to store data in a mesh.

A solution of a method for image display is provided according to embodiments of the present disclosure. The target location of the virtual object is obtained in the map scene displayed on the client. In a case that the virtual building is located in the map scene within the preset range centered on the target location, the display height of the virtual building is decreased to obtain the first target display shape of the virtual building. The first target display shape of the virtual building is displayed in the map scene. Since the display height of the virtual building is decreased, a field of view for the virtual object can be improved and less obstructed by the virtual building. Addressed is a technical problem that a displayed building may obstruct a field of view of a viewer in conventional technology.

A storage medium is further provided according to an embodiment of the present disclosure. The storage medium stores a computer program, and the computer program when being executed performs steps in any foregoing method embodiment.

In an optional embodiment, the storage medium may be configured to store the computer program for performing following steps.

A target location of a virtual object is obtained in a map scene displayed on a client.

A display height of a virtual building is decreased to obtain a first target display shape of the virtual building, in a case that the virtual building is located in the map scene within a preset range centered on the target location.

The first target display shape of the virtual building is displayed in the map scene.

In an optional embodiment, the storage medium is further configured to store the computer program for performing following steps.

A current height of a vertex of the virtual building in a mesh of the map scene is obtained by using a central processing unit in a terminal running the client. The mesh is configured to record spatial location data of the vertex of the virtual building, and the spatial location data includes the current height of the vertex of the virtual building.

The current height of the vertex of the virtual building in the spatial location data is adjusted to obtain updated spatial location data. The target height is smaller than the current height.

The updated spatial location data of the vertex of the virtual building is transmitted to the graphics processing unit in the terminal, to obtain a rendered image through rendering.

The rendered image is displayed in the map scene, and serves as said frame of the first animation.

In an optional embodiment, the storage medium is further configured to store the computer program for performing a following step. The target location of the virtual object is obtained in the map scene, where the virtual object is configured to represent the mobile terminal in the real scene, and the target location of the virtual object in the map scene is configured to represent a location of the mobile terminal in the real scene. The virtual building in the map scene is configured to represent a corresponding real building in the real scene..

In an optional embodiment, the storage medium is further configured to store the computer program used for performing following steps. The location of the mobile terminal, which represents the virtual object, in the real scene is obtained. A location in the map scene displayed on the client, which is mapped from the location of the mobile terminal in the real scene, is determined to be the target location of the virtual object.

In an optional embodiment, the storage medium is further configured to store the computer program used for performing following steps. The display height of the virtual building is increased to obtain a second target display shape of the virtual building, in a case that the virtual building is not located in the preset range centered on another target location to which the virtual object moves in the map scene. The second target display shape of the virtual building is displayed in the map scene.

In an optional embodiment, the storage medium is further configured to store the computer program used for performing steps included in the method according to the foregoing embodiments. Details are not described again herein.

A computer program product including instructions is further provided according to embodiments of the present disclosure. The instructions when executed by a computer configure the computer to perform the method according to the foregoing embodiments.

Those skilled in the art may understand that all or some of the steps of the methods in the foregoing embodiments may be implemented by a program instructing relevant hardware of the terminal device. The program may be stored in a computer-readable storage medium. The storage medium may include a flash disk, a ROM, a RAM, a magnetic disk, an optical disc, and the like.

An integrated unit in the foregoing embodiments may be stored in the foregoing computer-readable storage medium, when implemented as a software functional unit and sold or used as an independent product. Based on such an understanding, an essence or a part contributing to conventional technology of technical solutions of the present disclosure, or all or a part of technical solutions, may be implemented as a software product. The computer software product is stored in a storage medium and includes several instructions for instructing one or more computer devices (which may be a personal computer, a server, a network device, or the like) to perform all or some of steps of the methods in embodiments of the present disclosure.

Foregoing embodiments of the present disclosure lay emphasis on different aspects. A part which is not described in detail in one embodiment may refer to relevant description of another embodiment.

The client in some embodiments of the present disclosure may be implemented in other manners. The apparatus embodiments described above are merely exemplary. For example, units are merely divided according to logic functions, and may be divided in other manners in practice. For example, multiple units or components may be combined or integrated into another system, or, some features can be omitted or not performed. In addition, the displayed or discussed coupling, direct coupling, or communication connection may be indirect coupling or communication connection via some interfaces, units, or modules, and may be electrical or in other forms.

The units described as separate parts may or may not be physically separate. Components displayed as units may or may not be physical units, that is, may be located in one position or distributed among multiple network units. Some or all of the units may be selected according to a practical requirement to achieve an objective of solutions in the embodiments.

In embodiments of the present disclosure, all functional units may be integrated into one processing unit, or each functional unit may be physically independent, or two or more units are integrated into one unit. The integrated unit may be implemented as hardware or a software function unit.

Described above are merely exemplary embodiments of the present disclosure. Those skilled in the art may make various improvements and modifications without departing from the principle of the present disclosure.

## Claims

1. A method for image display, comprising:
obtaining (S202), by an electronic device, a target location of a virtual object in a map scene displayed on a client;
decreasing (S204), by the electronic device, a display height of a virtual building to obtain a first target display shape of the virtual building, in a case that the virtual building is located in the map scene within a preset range centered on the target location and a view of the virtual object is obstructed in the map scene by the virtual building located in the preset range centered on the target location; and displaying (S206), by the electronic device, the first target display shape of the virtual building in the map scene, wherein after displaying, by the electronic device, the first target display shape of the virtual building in the map scene, the method further comprises:
increasing, by the electronic device, the display height of the virtual building to obtain a second target display shape of the virtual building, in a case that the virtual building is not located in the preset range centered on another target location to which the virtual object moves in the map scene; and
displaying, by the electronic device, the second target display shape of the virtual building in the map scene.

2. The method according to claim 1, wherein the virtual object is capable to move in the map scene.

3. The method according to claim 1, wherein:
the virtual object is configured to represent the mobile terminal in a real scene;
the target location of the virtual object in the map scene is configured to represent a location of the mobile terminal in the real scene; and
the virtual building in the map scene is configured to represent a corresponding real building in the real scene.

4. The method according to claim 2, wherein movement of the virtual object in the map scene follows movement of the mobile terminal in the real scene.

5. The method according to any one of claims 1 to 4, wherein obtaining, by the electronic device, the target location of the virtual object in the map scene displayed on the client comprises:
obtaining, by the electronic device, a location of the mobile terminal in the real scene, wherein the mobile terminal is represented by the virtual object; and
determining, by the electronic device, a location in the map scene displayed on the client, which is mapped from the location of the mobile terminal in the real scene, to be the target location of the virtual object.

6. The method according to any one of claims 1 to 4, wherein:
the first target display shape comprises a flat shape, and
decreasing, by the electronic device, the display height of the virtual building to obtain the first target display shape of the virtual building comprises:
decreasing, by the electronic device, the display height of the virtual building to adjust the display shape of the virtual building in the map scene to be the flat shape.

7. The method according to any one of claims 1 to 4, wherein displaying, by the electronic device, the first target display shape of the virtual building in the map scene comprises:
playing, by the electronic device, a first animation in the map scene, wherein the first animation is configured to show a gradual decrease of the display height of the virtual building; and
displaying, by the electronic device, the first target display shape of the virtual building in the map scene after playing the first animation is finished.

8. The method according to claim 7, wherein each frame in the first animation is determined by:
obtaining, by the electronic device, a current height of a vertex of the virtual building in a mesh of the map scene, by using a central processing unit in a terminal running the client, wherein the mesh is configured to record spatial location data of the vertex of the virtual building, and the spatial location data comprises the current height of the vertex of the virtual building;
adjusting, by the electronic device, the current height of the vertex of the virtual building in the spatial location data, to obtain updated spatial location data, wherein the target height is smaller than the current height; and
transmitting, by the electronic device, the updated spatial location data of the vertex of the virtual building to the graphics processing unit in the terminal, to obtain a rendered image through rendering;
wherein the rendered image serves as said frame of the first animation.

9. The method according to claim 1, wherein displaying, by the electronic device, the second target display shape of the virtual building in the map scene comprises:
playing, by the electronic device, a second animation in the map scene, wherein the second animation is configured to show a gradual increase of the display height of the virtual building; and
displaying, by the electronic device, the second target display shape of the virtual building in the map scene after playing the second animation is finished.

10. The method according to any one of claims 1 to 8, wherein a height of another object is not adjusted in a case that the another object does not hide the object.

11. A storage medium, storing a computer program, wherein the computer program when executed is configured to perform the method according to any one of claims 1 to 10.

12. An electronic device, comprising:
a memory, and
a processor,
wherein the memory stores a computer program, and the processor is configured to perform the method according to any one of claims 1 to 10 through the computer program.

13. A computer program product, comprising instructions, wherein:
the instructions when executed by a computer configure the computer to perform the method according to any one of claims 1 to 10.

## Patentansprüche

1. Verfahren zur Bildanzeige, umfassend:
Ermitteln (S202) eines Zielorts eines virtuellen Objekts in einer auf einem Client angezeigten Kartenszene durch eine elektronische Vorrichtung;
Verringern (S204) einer Anzeigehöhe eines virtuellen Gebäudes durch die elektronische Vorrichtung, um eine erste Zielanzeigeform des virtuellen Gebäudes in einem Fall zu erhalten, in dem sich das virtuelle Gebäude in der Kartenszene innerhalb eines voreingestellten Bereichs befindet, der auf den Zielort zentriert ist, und eine Ansicht des virtuellen Objekts in der Kartenszene durch das virtuelle Gebäude behindert wird, das sich in dem voreingestellten Bereich befindet, der auf den Zielort zentriert ist und Anzeigen (S206) der ersten Zielanzeigeform des virtuellen Gebäudes in der Kartenszene durch die elektronische Vorrichtung, wobei nach dem Anzeigen der ersten Zielanzeigeform des virtuellen Gebäudes in der Kartenszene durch die elektronische Vorrichtung das Verfahren ferner umfasst:
Erhöhen der Anzeigehöhe des virtuellen Gebäudes durch die elektronische Vorrichtung, um eine zweite Zielanzeigeform des virtuellen Gebäudes zu erhalten, wenn sich das virtuelle Gebäude nicht in dem voreingestellten Bereich befindet, der auf einen anderen Zielort zentriert ist, zu dem sich das virtuelle Objekt in der Kartenszene bewegt; und
Anzeigen der zweiten Zielanzeigeform des virtuellen Gebäudes in der Kartenszene durch die elektronische Vorrichtung.

2. Verfahren nach Anspruch 1, wobei das virtuelle Objekt in der Lage ist, sich in der Kartenszene zu bewegen.

3. Verfahren nach Anspruch 1, wobei:
das virtuelle Objekt so konfiguriert ist, dass es das mobile Endgerät in einer realen Szene darstellt;
der Zielort des virtuellen Objekts in der Kartenszene so konfiguriert ist, dass er einen Ort des mobilen Endgeräts in der realen Szene darstellt; und
das virtuelle Gebäude in der Kartenszene so konfiguriert ist, dass es ein entsprechendes reales Gebäude in der realen Szene darstellt.

4. Verfahren nach Anspruch 2, wobei die Bewegung des virtuellen Objekts in der Kartenszene der Bewegung des mobilen Endgeräts in der realen Szene folgt.

5. Verfahren nach einem der Ansprüche 1 bis 4, wobei das Ermitteln des Zielorts des virtuellen Objekts in der auf dem Client angezeigten Kartenszene durch die elektronische Vorrichtung umfasst:
Ermitteln eines Standorts des mobilen Endgeräts in der realen Szene durch die elektronische Vorrichtung, wobei das mobile Endgerät durch das virtuelle Objekt dargestellt wird; und
Bestimmen eines Ortes in der auf dem Client angezeigten Kartenszene, der vom Standort des mobilen Endgeräts in der realen Szene abgebildet wird, als Zielort des virtuellen Objekts durch das elektronische Gerät.

6. Verfahren nach einem der Ansprüche 1 bis 4, wobei:
die erste Form der Zielanzeige eine flache Form umfasst, und
Verringern der Anzeigehöhe des virtuellen Gebäudes durch die elektronische Vorrichtung, um die erste Zielanzeigeform des virtuellen Gebäudes zu erhalten:
Verringern der Anzeigehöhe des virtuellen Gebäudes durch die elektronische Vorrichtung, um die Anzeigeform des virtuellen Gebäudes in der Kartenszene auf die flache Form einzustellen.

7. Verfahren nach einem der Ansprüche 1 bis 4, wobei das Anzeigen der ersten Zielanzeigeform des virtuellen Gebäudes in der Kartenszene durch die elektronische Vorrichtung umfasst:
Abspielen einer ersten Animation in der Kartenszene durch die elektronische Vorrichtung, wobei die erste Animation so konfiguriert ist, dass sie eine allmähliche Abnahme der Anzeigehöhe des virtuellen Gebäudes zeigt; und
Anzeigen der ersten Zielanzeigeform des virtuellen Gebäudes in der Kartenszene durch das elektronische Gerät, nachdem die Wiedergabe der ersten Animation beendet ist.

8. Verfahren nach Anspruch 7, wobei jedes Bild in der ersten Animation bestimmt wird durch:
Erhalten einer aktuellen Höhe eines Scheitelpunkts des virtuellen Gebäudes in einem Netz der Kartenszene durch die elektronische Vorrichtung unter Verwendung einer zentralen Verarbeitungseinheit in einem Endgerät, auf dem der Client läuft, wobei das Netz so konfiguriert ist, dass es räumliche Standortdaten des Scheitelpunkts des virtuellen Gebäudes aufzeichnet, und die räumlichen Standortdaten die aktuelle Höhe des Scheitelpunkts des virtuellen Gebäudes umfassen;
Einstellen der aktuellen Höhe des Scheitelpunkts des virtuellen Gebäudes in den räumlichen Positionsdaten durch die elektronische Vorrichtung, um aktualisierte räumliche Positionsdaten zu erhalten, wobei die Zielhöhe kleiner als die aktuelle Höhe ist; und
Senden der aktualisierten räumlichen Positionsdaten des Scheitelpunkts des virtuellen Gebäudes durch die elektronische Vorrichtung an die Grafikverarbeitungseinheit im Endgerät, um durch Rendering ein gerendertes Bild zu erhalten;
wobei das gerenderte Bild als das Bild der ersten Animation dient.

9. Verfahren nach Anspruch 1, wobei das Anzeigen der zweiten Zielanzeigeform des virtuellen Gebäudes in der Kartenszene durch die elektronische Vorrichtung umfasst:
Abspielen einer zweiten Animation in der Kartenszene durch die elektronische Vorrichtung, wobei die zweite Animation so konfiguriert ist, dass sie eine allmähliche Zunahme der Anzeigehöhe des virtuellen Gebäudes zeigt; und
Anzeigen der zweiten Zielanzeigeform des virtuellen Gebäudes in der Kartenszene durch die elektronische Vorrichtung, nachdem das Abspielen der zweiten Animation beendet ist.

10. Verfahren nach einem der Ansprüche 1 bis 8, wobei die Höhe eines anderen Objekts nicht angepasst wird, wenn das andere Objekt das Objekt nicht verdeckt.

11. Speichermedium, das ein Computerprogramm speichert, wobei das Computerprogramm, wenn es ausgeführt wird, so konfiguriert ist, dass es das Verfahren nach einem der Ansprüche 1 bis 10 ausführt.

12. Elektronische Vorrichtung, umfassend:
einen Speicher, und
einen Prozessor,
wobei der Speicher ein Computerprogramm speichert und der Prozessor so konfiguriert ist, dass er das Verfahren nach einem der Ansprüche 1 bis 10 mittels des Computerprogramms ausführt.

13. Computerprogrammprodukt, das Anweisungen umfasst, wobei:
die Anweisungen, wenn sie von einem Computer ausgeführt werden, den Computer so konfigurieren, dass er das Verfahren nach einem der Ansprüche 1 bis 10 ausführt.

## Revendications

1. Procédé d'affichage d'image, consistant à:
obtenir (S202), par un dispositif électronique, un emplacement cible d'un objet virtuel dans une scène de carte affichée sur un client;
réduire (S204), par le dispositif électronique, une hauteur d'affichage d'un bâtiment virtuel pour obtenir une première forme d'affichage cible du bâtiment virtuel, au cas où le bâtiment virtuel soit situé dans la scène de carte dans un rayon d'action prédéfini au centre sur l'emplacement cible et qu'une vue de l'objet virtuel soit obstruée dans la scène de carte par le bâtiment virtuel situé dans le rayon d'action prédéfini au centre sur l'emplacement cible; et afficher (S206), par le dispositif électronique, la première forme d'affichage cible du bâtiment virtuel dans la scène de carte, le procédé consiste en outre à:
augmenter, par le dispositif électronique, la hauteur d'affichage du bâtiment virtuel pour obtenir une seconde forme d'affichage cible du bâtiment virtuel, au cas où le bâtiment virtuel ne soit pas situé dans le rayon d'action prédéfini au centre sur un autre emplacement cible vers lequel l'objet virtuel se déplace dans la scène de carte; et
afficher, par le dispositif électronique, la seconde forme d'affichage cible du bâtiment virtuel dans la scène de carte.

2. Procédé selon la revendication 1, dans lequel l'objet virtuel est capable de se déplacer dans la scène de carte.

3. Procédé selon la revendication 1, dans lequel:
l'objet virtuel est configuré pour représenter le terminal mobile dans la scène réelle;
l'emplacement cible de l'objet virtuel dans la scène de carte est configuré pour représenter un emplacement du terminal mobile dans la scène réelle; et
le bâtiment virtuel dans la scène de carte est configuré pour représenter un bâtiment réel correspondant dans la scène réelle.

4. Procédé selon la revendication 2, dans lequel le déplacement de l'objet virtuel dans la scène de carte suit le déplacement du terminal mobile dans la scène réelle.

5. Procédé selon l'une quelconque des revendications 1 à 4, dans lequel l'obtention, par le dispositif électronique, de l'emplacement cible de l'objet virtuel dans la scène de carte affiché sur le client consiste à:
obtenir, par le dispositif électronique, un emplacement du terminal mobile dans la scène réelle, dans lequel le terminal mobile est représenté par l'objet virtuel; et
déterminer, par le dispositif électronique, un emplacement dans la scène de carte affichée sur le client, qui est mis en correspondance à partir de l'emplacement du terminal mobile dans la scène réel, pour être l'emplacement cible de l'objet virtuel.

6. Procédé selon l'une quelconque des revendications 1 à 4, dans lequel:
la première forme d'affichage cible comprend une forme plate, et
la réduction, par le dispositif électronique, de la hauteur d'affichage du bâtiment virtuel pour obtenir la première forme d'affichage cible du bâtiment virtuel consiste à:
réduire, par le dispositif électronique, la hauteur d'affichage du bâtiment virtuel pour ajuster la forme d'affichage du bâtiment virtuel dans la scène de carte de manière à ce qu'elle soit une forme plate.

7. Procédé selon l'une quelconque des revendications 1 à 4, dans lequel l'affichage, par le dispositif électronique, de la première forme d'affichage cible du bâtiment virtuel dans la scène de carte consiste à:
lire, par le dispositif électronique, une première animation dans la scène de carte, dans lequel la première animation est configurée pour montrer une diminution progressive de la hauteur d'affichage du bâtiment virtuel; et
afficher, par le dispositif électronique, la première forme d'affichage cible du bâtiment virtuel dans la scène de carte une fois la lecture de la première animation terminée.

8. Procédé selon la revendication 7, dans lequel chaque trame dans la première animation est déterminée par:
obtention, par le dispositif électronique, d'une hauteur actuelle d'un sommet du bâtiment virtuel dans un maillage de la scène de carte, à l'aide d'une unité de traitement central dans un terminal faisant fonctionner le client, dans lequel le maillage est configuré pour enregistrer des données d'emplacement spatial du somment du bâtiment virtuel, et les données d'emplacement spatial comprennent la hauteur actuelle du sommet du bâtiment virtuel;
régler, par le dispositif électronique, la hauteur actuelle du sommet du bâtiment virtuel dans les données d'emplacement spatial, pour obtenir des données d'emplacement spatial mises à jour, dans lequel la hauteur cible est inférieure à la hauteur actuelle; et
transmettre, par le dispositif électronique, les données d'emplacement spatial mises à jour du sommet du bâtiment virtuel à l'unité de traitement graphique dans le terminal, pour obtenir une image restituée par restitution;
dans lequel l'image restituée sert de trame de la première animation.

9. Procédé selon la revendication 1, dans lequel l'affichage, par le dispositif électronique, de la seconde forme d'affichage cible du bâtiment virtuel dans la scène de carte consiste à:
lire, par le dispositif électronique, une seconde animation dans la scène de carte, dans lequel la seconde animation est configurée pour montrer une augmentation progressive de la hauteur d'affichage du bâtiment virtuel; et
afficher, par le dispositif électronique, la seconde forme d'affichage cible du bâtiment virtuel dans la scène de carte une fois la lecture de la seconde animation terminée.

10. Procédé selon l'une quelconque des revendications 1 à 8, dans lequel une hauteur d'un autre objet n'est pas ajustée au cas où l'autre objet ne cache pas l'objet.

11. Support de stockage, stockant un programme informatique, dans lequel le programme informatique, lorsqu'il est exécuté, est configuré pour exécuter le procédé selon l'une quelconque des revendications 1 à 10.

12. Dispositif électronique, comprenant:
une mémoire, et
un processeur,
dans lequel la mémoire stocke un programme informatique, et le processeur est configuré pour exécuter le procédé selon l'une quelconque des revendications 1 à 10 par l'intermédiaire du programme d'ordinateur.

13. Produit programme d'ordinateur comprenant des instructions, dans lequel :
les instructions, lorsqu'elles sont exécutées par un ordinateur configurent l'ordinateur pour exécuter le procédé selon l'une quelconque des revendications 1 à 10.
